# EUROPÄISCHE PATENTSCHRIFT

(11) **EP 2 701 502 B1**
(45) Veröffentlichungstag und Bekanntmachung des Hinweises auf die Patenterteilung: **05.08.2015**
(21) Anmeldenummer: 12716450.7
(22) Anmeldetag: 25.04.2012
(51) Int. Cl.: A01N 25/02, A01N 43/40, A01N 43/42, A01N 47/24, A01N 43/84

(54) **ZUSAMMENSETZUNG ENTHALTEND EIN PESTIZID UND EIN ACETALISCHES LÖSUNGSMITTEL**
COMPOSITION COMPRISING A PESTICIDE AND AN ACETALIC SOLVENT
COMPOSITION COMPRENANT UN PESTICIDE ET UN SOLVANT ACETALIQUE

(30) Priorität: 29.04.2011 EP 11164327; 17.05.2011 EP 11166304
(43) Veröffentlichungstag der Anmeldung: 05.03.2014
(73) Patentinhaber: BASF SE, 67056 Ludwigshafen (DE)
(72) Erfinder: KLINGELHOEFER, Paul, 68165 Mannheim (DE); SCHNABEL, Gerhard, 63820 Elsenfeld (DE); PELZER, Ralf, 37699 Fürstenberg (DE); SPIEGLER, Wolfgang, 67551 Worms (DE)
(86) Internationale Anmeldenummer: PCT/EP2012/057575
(87) Internationale Veröffentlichungsnummer: WO 2012/146623

(56) Entgegenhaltungen:
- EP-A1- 0 230 773
- WO-A1-01/17345
- WO-A1-97/34986
- DE-A1- 2 200 617
- US-A- 5 626 852

## Beschreibung

Gegenstand der vorliegenden Erfindung ist eine agrochemische Zusammensetzung enthaltend ein Pestizid und ein Lösungsmittel der Formel (A) wie unten beschrieben. Weitere Gegenstände sind ein Verfahren zur Herstellung der Zusammensetzung, indem man das Pestizid und das Lösungsmittel in Kontakt bringt; eine Verwendung des Lösungsmittels der Formel (A) in agrochemischen Zusammensetzungen; Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt; sowie Saatgut enthaltend die Zusammensetzung. Kombinationen bevorzugter Merkmale mit anderen bevorzugten Merkmalen werden von der vorliegenden Erfindung umfasst.

WO2001/17345 offenbart eine Zusammensetzung enthaltend eine bioaktive Verbindung und ein Acetal Lösungsmittel.

DE 22 00 617 offenbart eine Zusammensetzung enthaltend ein Insektizid und ein acetalisches Lösungsmittel, wie zum Beispiel Benzaldehydglycerylacetal.

Nachteilig an den bekannten agrochemischen Zusammensetzungen enthaltend Acetale ist unter anderem, dass keine hohe Konzentration Pestizid gelöst werden kann. Nachteilig ist auch, dass die Acetale einen starken Geruch, einen niederen Flammpunkt, hohe Viskosität, hohe Toxizität, und hohe Wasserlöslichkeit haben. Aufgabe der vorliegenden Erfindung war eine Zusammensetzung umfassend Pestizid bereitzustellen, welche diese Nachteile überwindet.

Die Aufgabe wurde gelöst durch eine agrochemische Zusammensetzung, enthaltend ein Pestizid und ein Lösungsmittel der Formel (A) 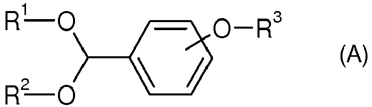 wobei R¹ und R² unabhängig voneinander C₁-C₄-Alkyl sind oder gemeinsam ein C₂-C₆-Alkylen sind, und R³ C₁-C₈-Alkyl ist, und wobei das Pestizid bei 20 °C zu höchstens 10 g/l wasserlöslich ist.

Geeignete Beispiele für Lösungsmittel der Formel (A) sind die folgenden Strukturen (1) bis (15):

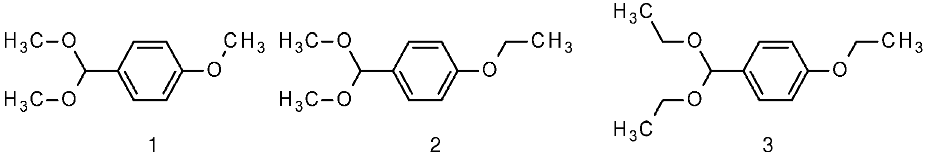

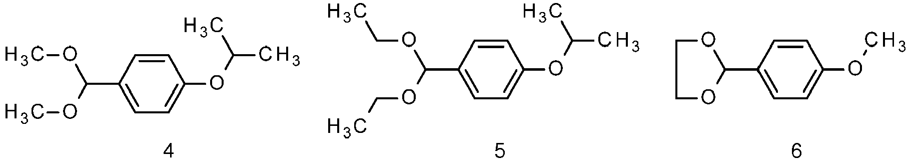

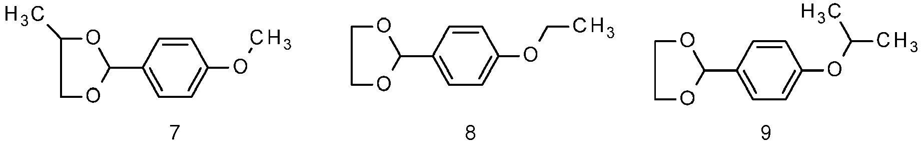

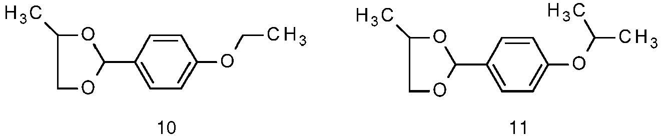

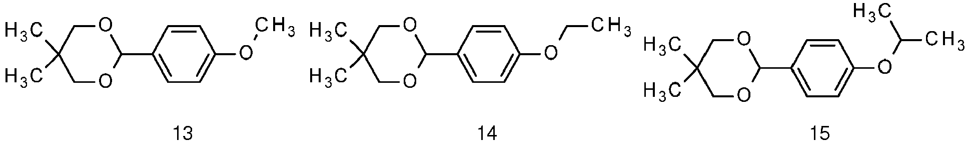

In Formel (A) können **R¹** und **R²** unabhängig voneinander C₁-C₄-Alkyl sein, wobei der Alkylrest linear oder verzweigt sein kann. Bevorzugt ist er linear. Üblicherweise sind R¹ und R² aliphatisch. Üblicherweise sind R¹ und R² unsubstituiert. Bevorzugt sind R¹ und R² identisch. R¹ und R² können unabhängig voneinander C₁-C₄-Alkyl (wie Methyl, Ethyl, n-Propyl, iso-Propyl, n-Butyl, iso-Butyl) sein. Insbesondere sind R¹ und R² beide Methyl, Ethyl, oder n-Propyl, vor allem Methyl oder Ethyl, speziell Methyl.

In Formel (A) können **R¹** und **R²** können gemeinsam ein **C₂-C₆-Alkylen** sein. In diesem Fall würden R¹ und R² eine cyclische Acetalgruppe bilden. Üblicherweise ist das C₂-C₆- Alkylen aliphatisch. Üblicherweise ist das C₂-C₆-Alkylen linear oder verzweigt. Üblicherweise ist das C₂-C₆-Alkylen frei von Heteroatom-haltigen Substituenten. Bevorzugt sind R¹ und R² gemeinsam ein C₂-C₅-Alkylen, speziell Ethylen, n-Propylen, iso-Propylen (wie -CH₂-CH(CH₃)-), iso-Butylen (wie -CH₂-CH(CH₃)₂-), oder iso-Pentylen (wie -CH₂-C(CH₃)₂-CH₂-), und ganz speziell Ethylen, n-Propylen, oder iso-Propylen (wie -CH₂-CH(CH₃)-).

In Formel (A) kann **R³** linear oder verzweigt sein. Bevorzugt ist er linear. Üblicherweise ist R³ aliphatisch. Üblicherweise ist R³ unsubstituiert. R³ ist C₁-C₈-Alkyl, speziell bevorzugt C₁-C₄-Alkyl (wie Methyl, Ethyl, n-Propyl, iso-Propyl, n-Butyl, iso-Butyl). Insbesondere ist R³ Methyl.

Das Lösungsmittel der Formel (A) kann in ortho-, meta- oder para-Konstitution vorliegen. Bevorzugt liegt es in para-Konstitution vor.

In Formel (A) sind R¹ und R² unabhängig voneinander C₁-C₄-Alkyl oder gemeinsam ein C₂-C₆-Alkylen, und R³ ist bevorzugt C₁-C₄-Alkyl. Besonders bevorzugt sind R¹, R² und R³ Methyl.

Speziell geeignete Lösungsmittel der Formel (A) sind solche der Formeln A1, A2 oder A3, wobei die Formel A1 am meisten bevorzugt ist.

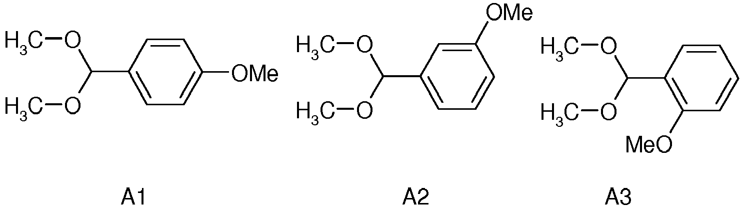

Das Lösungsmittels der Formel (A) hat üblicherweise eine Löslichkeit in Wasser von höchstens 1,0 Gew.% bei 20 °C, bevorzugt von höchstens 0,5 Gew.%, besonders bevorzugt von höchstens 0,1 Gew.%.

Die Verbindungen der Formel (A)sind allgemein bekannt und kommerziell erhältlich, beispielsweise p-Anisaldehyddimethylacetal. Die Acetale der Formel (A) können nach üblichen Verfahren hergestellt werden, beispielsweise durch Reaktion von einem Alkoxy-subtituierten Benzaldehyd mit einem Alkohol.

Die erfindungsgemäße Zusammensetzung enthält üblicherweise mindestens 10 Gew.%, bevorzugt mindestens 20 Gew.%, besonders bevorzugt mindestens 30 Gew.% Lösungsmittel der Formel (A) bezogen auf die Zusammensetzung. Meist enthält die Zusammensetzung höchstens 95 Gew.%, bevorzugt höchstens 90 Gew.%, besonders bevorzugt höchstens 80 Gew.% Lösungsmittel der Formel (A).

Das Lösungsmittel der Formel (A) enthält üblicherweise das Pestizid, welches dabei in fester, gelöster, suspendierter und/oder emulgierter Form enthalten sein kann. Bevorzugt enthält das Lösungsmittel der Formel (A) das Pestizid in gelöster Form enthält.

Unter einer **agrochemischen** Zusammesetzung wird üblicherweise eine Zusammensetzung verstanden, die ein Pestizid enthält und die eingesetzt werden kann in einem Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung gauf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Der Begriff **Pestizid** bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide und Herbizide, insbesondere Fungizide und Herbizide. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamdide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolinone, Triazolocarboxamide, Triazolopyrimidine, Triketone, Uracile, Harnstoffe.

Das **Pestizid** ist üblicherweise bei 20 °C zu mindestens 10 g/l, bevorzugt zu mindestens 30 g/l und besonders bevorzugt zu mindestens 50 **g/l löslich im Lösungsmittel** der Formel (A) (insbesondere der Formel (A)).

Das **Pestizid** ist bei 20 °C zu höchstens 10 g/l, bevorzugt zu höchstens 1 g/l und besonders bevorzugt zu höchstens 0,1 **g/l löslich in Wasser.**

Die erfindungsgemäße Zusammensetzung kann auch weitere Pestizide umfassen. Die weiteren Pestizide können gelöst, suspendiert, und/oder emulgiert vorliegen.

In einer weiteren Ausführungsform liegt das Pestizid in gelöster Form in der flüssigen, agrochemischen Zusammensetzung vor. Bevorzugt ist das Pestizid bei 20 ° zu mindestens 90 Gew.%, bevorzugt zu mindestens 98 Gew.%, bezogen auf das Pestizid, im Lösungsmittelsystem gelöst.

In einer weiteren Ausführungsform ist mindestens ein Pestizid zu mindestens 90 Gew.%, bezogen auf das Pestizid, im Lösungsmittelsystem in Form fester Teilchen **suspendiert.** Falls die Zusammensetzung mindestens zwei Pestizide umfasst, ist mindestens ein Pestizid zu mindestens 90 Gew.% im Lösungsmittelsystem gelöst. Bevorzugt ist das Pestizid zu mindestens 95 Gew.%, besonders bevorzugt zu mindestens 98 Gew.% im Lösungsmittelsystem suspendiert.

Die erfindungsgemäße Zusammensetzung umfasst üblicherweise 0.1 bis 70 Gew.% Pestizid, bevorzugt 1 bis 50 Gew. %, insbesondere 3 bis 30 Gew.%, bezogen auf die Zusammensetzung.

Die erfindungsgemäße Zusammensetzung enthält **Formulierungshilfsmittel,** wobei sich die Wahl der Hilfsmittel üblicherweise nach der konkreten Anwendungsform bzw. dem Wirkstoff richtet. Beispiele für geeignete Formulierungshilfsmittel sind zusätzliche Lösungsmittel, Tenside und andere oberflächenaktive Stoffe (wie Solubilisatoren, Schutzkolloide, Netzmittel und Haftmittel), Adjuvantien, organische und anorganische Verdicker, Bakterizide, Frostschutzmittel, Entschäumer, Farbstoffe und Kleber (z. B. für Saatgutbehandlung).

Als **zusätzliche Lösungsmittel,** die in der Zusammensetzung zusätzlich zum Lösungsmittel der Formel (A) enthalten sein können, kommen organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Ethanol, Propanol, Butanol, Benzylalkohol und Cyclohexanol, Glykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Grundsätzlich können auch Lösungsmittelgemische verwendet werden. Bevorzugt werden der erfindungsgemäßen Zusammensetzung höchstens 40 Gew.%, bevorzugt höchstens 20 Gew.% zusätzliche Lösungsmittel zugesetzt, jeweils bezogen auf die Zusammensetzung.

**Tenside** können einzeln oder in Mischung eingesetzt werden. Tenside sind Verbindungen, welche die Oberflächenspannung von Wasser verringern. Als Tenside kommen anionische, kationische, nicht-ionische und amphotere Tenside, Blockpolymere und Polyelektrolyte in Betracht. Die erfindungsgemäße Zusammensetzung enthält bevorzugt **mindestens ein anionisches Tensid.**

Geeignete **anionische Tenside** sind Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Ligninsulfonate, Sulfonate von Fettsäuren und Ölen, Sulfonate von ethoxylierten Alkylphenolen, Sulfonate von ethoxylierten Arylphenolen, Sulfonate von kondensierten Naphtalinen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäure und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate. Bevorzugte anionische Tenside sind Sulfonate von ethoxylierten Arylphenolen, insbesondere phophatierte oder sulfatierte Di- und/oder Tristyrylphenylalkoxylate, wie sie beispielsweise in WO 2007/110355, Seite 3, Zeile 30 bis Seite 5, Zeile 11 beschrieben sind.

Geeignete **nicht-ionische** Tenside sind Alkoxylate, N-alkylierte Fettsäureamide, Aminoxide, Ester oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fettsäureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside.

Geeignete kationische Tenside sind quarternäre Tenside, beispielsweise quartäre AmmoniumVerbindungen mit einer oder zwei hydrophoben Gruppen, oder Salze langkettiger primärer Amine. Geeignete amphothere Tenside sind Alkylbetaine und Imidazoline. Geeignete Blockpolymere sind Blockpolymere vom A-B oder A-B-A Typ umfassend Blöcke aus Polyethylenoxid und Polypropylenoxid oder vom A-B-C Typ umfassend Alkanol, Polyethylenoxid und Polypropylenoxid. Geeignete Polyelektrolyte sind Polysäuren oder Polybasen. Beispiele für Polysäuren sind Alkalisalze von Polyacrylsäure. Beispiele für Polybasen sind Polyvinylamine oder Polyethylenamine.

Die erfindungsgemäße Zusammensetzung kann beliebige Mengen Tensid umfassen. Sie kann 0,1 bis 40 Gew.%, bevorzugt 1 bis 30 und insbesondere 2 bis 20 Gew.% Gesamtmenge von Tensiden umfassen, bezogen auf die Gesamtmenge der Zusammensetzung.

Beispiele für **Adjuvantien** sind organisch modifizierte Polysiloxane, wie BreakThruS 240^{®}; Alkoholalkoxylate, wie Atplus^{®}245, Atplus^{®}MBA 1303, Plurafac^{®}LF und Lutensol^{®} ON ; EO-PO-Blockpolymerisate, z. B. Pluronic^{®} RPE 2035 und Genapol^{®} B; Alkoholethoxylate, z. B. Lutensol^{®} XP 80; und Natriumdioctylsulfosuccinat, z. B. Leophen^{®} RA.

Beispiele für **Verdicker** (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan^{®}, CP Kelco), Rhodopol^{®} 23 (Rhodia) oder Veegum^{®} (R.T. Vanderbilt) oder Attaclay^{®} (Engelhard Corp.).

**Bakterizide** können zur Stabilisierung der Zusammensetzung zugesetzt werden. Beispiele für Bakterizide sind solche basierend auf Diclorophen und Benzylalkoholhemiformal (Proxel^{®} der Fa. ICI oder Acticide^{®} RS der Fa. Thor Chemie und Kathon^{®} MK der Fa. Rohm & Haas) sowie Isothiazolinonderivaten wie Alkylisothiazolinonen und Benzisothiazolinonen (Acticide^{®} MBS der Fa. Thor Chemie).

Beispiele für geeignete **Frostschutzmittel** sind Ethylenglycol, Propylenglycol, Harnstoff und Glycerin.

Beispiele für **Entschäumer** sind Silikonemulsionen (wie z. B. Silikon^{®} SRE, Wacker, Deutschland oder Rhodorsil^{®}, Rhodia, Frankreich), langkettige Alkohole, Fettsäuren, Salze von Fettsäuren, fluororganische Verbindungen und deren Gemische.

Beispiele für **Farbmittel** sind sowohl in Wasser wenig lösliche Pigmente als auch in Wasser lösliche Farbstoffe. Als Beispiele genannt seien die unter den Bezeichnungen Rhodamin B, C. I. Pigment Red 112 und C. I. Solvent Red 1, Pigment blue 15:4, Pigment blue 15:3, Pigment blue 15:2, Pigment blue 15:1, Pigment blue 80, Pigment yellow 1, Pigment yellow 13, Pigment red 48:2, Pigment red 48:1, Pigment red 57:1, Pigment red 53:1, Pigment orange 43, Pigment orange 34, Pigment orange 5, Pigment green 36, Pigment green 7, Pigment white 6, Pigment brown 25, Basic violet 10, Basic violet 49, Acid red 51, Acid red 52, Acid red 14, Acid blue 9, Acid yellow 23, Basic red 10, Basic red 108 bekannten Farbstoffe und Pigmente.

Beispiele für **Kleber** sind Polyvinylpyrrolidon, Polyvinylacetat, Polyvinylalkohol und Celluloseether (Tylose^{®}, Shin-Etsu, Japan).

Üblicherweise liegen erfindungsgemäßen Zusammensetzungen in Form agrochemischer **Formulierungen** vor. Geeignete agrochemische Formulierungen sind wasserlösliche Konzentrate (SL, LS), redispergierbare Konzentrate (DC), emulgierbare Konzentrate (EC), Emulsionen (EW, EO, ES, ME), Suspensionen (SC, OD, FS), Suspoemulsionen (SE), und Pulver und Granulate (WP, WG).

Bevorzugt liegt die Zusammensetzung in Form eines emulgierbaren Konzentrates, Emulsion, Suspension (wie OD, FS), Suspoemulsion, Pulver oder Granulats vor. In einer weiteren bevorzugten Ausführungsform liegt die Zusammensetzung in Form einer WG Formulierung vor, wie beispielsweise in WO2007/028505 oder WO2007/028504 beschrieben.

Die erfindungsgemäße Zusammensetzung wird meist vor der Anwendung verdünnt um den sog. **Tankmix** herzustellen. Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Die verdünnte Zusammensetzung wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1%. Die Aufwandmengen liegen bei der Anwendung im Pflanzenschutz je nach Art des gewünschten Effektes zwischen 0,01 und 2,0 kg Wirkstoff pro ha.

Die vorliegende Erfindung betrifft auch ein Verfahren **zur Bekämpfung** von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

Des weiteren betrifft die Erfindung **Saatgut,** das mit einer erfindungsgemäßen Zusammensetzung behandelt wurde. Bevorzugt wurde das Saatgut mit der erfindungsgemäßen Zusammensetzung gebeizt. Beizen bedeutet, dass das Saatgut mit der Zusammensetzung behandelt wurde und die Zusammensetzung auf dem Saatgut verbleibt. Diese Zusammensetzung kann auf das Saatgut unverdünnt oder, bevorzugt, verdünnt angewendet werden. Hierbei kann die entsprechende Zusammensetzung 2 bis 10-fach verdünnt werden, so dass in den für die Beize zu verwendeten Zusammensetzungen 0,01 to 60% Gew.-%, vorzugsweise 0,1 to 40% Gew.-% Pestizid vorhanden sind. Die Anwendung kann vor der Aussaat erfolgen. Die Behandlung von pflanzlichem Vermehrungsmaterial, insbesondere die Behandlung von Saatgut, sind dem Fachmann bekannt, und erfolgen durch Bestäuben, Beschichten, Pelletieren, Eintauchen oder Tränken des pflanzlichen Vermehrungsmaterial, wobei die Behandlung bevorzugt durch Pelletieren, Beschichten und Bestäuben erfolgt, so dass z. B. eine vorzeitige Keimung des Saatguts verhindert wird. Bei der Behandlung von Staatgut werden im allgemeinen Pestizidmengen von 1 bis 1000 g/100 kg, vorzugsweise 5 bis 100 g/100 kg Vermehrungsmaterial bzw. Saatgut verwendet.

Die vorliegende Erfindung betrifft auch ein **Verfahren** zur Herstellung einer erfindungsgemäßen Zusammensetzung, wobei man das Pestizid und das Lösungsmittel der Formel (A)in Kontakt bringt, z.B. mischt. Bevorzugte Lösungsmittel der Formel (A) und Lösungsmittel sind wie oben beschrieben. Das Vermischen erfolgt durch übliche Mischverfahren, wie Rühren, Schütteln, oder sonstigen Energieeintrag. Weitere Hilfsmittel, die zur Herstellung von agrochemischen Formulierungen eingesetzt werden, können in üblichen Mengen zugesetzt werden. Beispiele geeigneter Formulierungshilfsmittel sind wie oben beschrieben.

Die vorliegende Erfindung betrifft auch die **Verwendung** des Lösungsmittels der Formel (A) in agrochemischen Zusammensetzungen, beispielsweise als Formulierungshilfsmitte, beispielsweise die vorgenannten Hilfstoffe für agrochemische Formulierungen.

**Vorteile** der vorliegenden Erfindung sind unter anderem, dass eine hohe Konzentration von Pestizid in dem Lösungsmittels der Formel (A) gelöst werden kann. Das Lösungsmittels der Formel (A) ist einfach und preisgünstig industriell herzustellen aus bekannten Edukten. Insbesondere Anisaldehyddimethylacetal ist großindustriell verfügbar. Weiterer Vorteil der Lösungsmittels der Formel (A) ist ihr sehr geringer Geruch; ihr sehr hoher Flammpunkt; ihre geringe Viskosität; ihre geringe Toxizität, und ihre geringe Wasserlöslichkeit. Diese Vorteile sind sehr wichtig, damit die Lösungsmittels der Formel (A) von Landwirten sicher eingesetzt werden können, und damit vorteilhafte agrochemische Formulierungen bereitgestellt werden können.

Nachfolgende Beispiele erläutern die Erfindung ohne sie einzuschränken.

### Beispiele

Benzaldehyddimethylacetal (nicht erfindungsgemäß): Kommerziell erhältlich von Acros Organics, >98 Gew.%, CAS Nr. 1125-88-8.
p-Anisaldehyddiemthylacetal (4-Methoxybenzaldehyd-Dimethylacetal): Kommerziell erhältlich von Acros Organics, >98 Gew.%, CAS Nr. 2186-92-7.

### Beispiel 1 - Löslichkeit von Pestiziden

A) Pyraclostrobin wurde bei 20 °C unter Rühren zu Benzaldehyddimethylacetal oder p-Anisaldehyddimethylacetal gegeben. In beiden Fällen konnte eine Löslichkeit von Pyraclostrobin von mindestens 50 Gew.% festgestellt werden.
B) Clodinafop-propargyl und Cloquintocet-mexyl (Gewichtsverhältnis 4:1) wurden bei 20 °C unter Rühren zu Benzaldehyddimethylacetal oder zu p-Anisaldehyddimethylacetal gegeben. Man konnte in beiden Fällen eine mindestens 50 Gew.%-ige Lösung herstellen.
C) Die maximale Löslichkeit von dem Herbizid 1,5-dimethyl-6-thioxo-3-(2,2,7-trifluoro-3-oxo-4-(prop-2-ynyl)-3,4-dihydro-2H-benzo[b][1,4]oxazin-6-yl)-1,3,5-triazinan-2,4-dion wurde bei 20 °C bestimmt und man fand in Solvesso® 200 ND (ein aromatisches Lösungsmittelgemisch mit >99 Gew.% Aromaten; Siedebereich 235-290 °C) 63 g/l, in Solvesso® 150 ND (ein aromatisches Lösungsmittelgemisch mit >99 Gew.% Aromaten; Siedebereich 179-194 °C) 19 g/l, und in p-Anisaldehyddiemthylacetal 214 g/l.

### Beispiel 2 - Löslichkeit in Wasser

Die Löslichkeit von Benzaldehyddimethylacetal oder p-Anisaldehyddimethylacetal in Wasser bei 20 °C wurde analysiert. In beiden Fällen konnte höchstens 0,1 Gew.% in Wasser gelöst werden.

### Beispiel 3 - Geruch

In einem Blindtest mir drei Personen wurde der Geruch von Benzaldehyddimethylacetal oder p-Anisaldehyddimethylacetal verglichen.

Benzaldehyddimethylacetal hatte einen stechenden Geruch. Im Sicherheitsdatenblatt wurde der Geruch als "starke Note, metallisch, Mandel" beschrieben.

p-Anisaldehyddimethylacetal hatte einen milden Geruch. Im Sicherheitsdatenblatt von Acros Organics (Revisionsstand 20.7.2009) wurde der Geruch als "angenehmer Geruch" oder "Blumig" (im Sicherheitsdatenblatt von TCI Europe NV, Revisionsstand 22.12.2010) beschrieben.

### Beispiel 4 - Toxizität

Benzaldehyddimethylacetal war nach der Europäischen Union nach EU Direktive 67/548/EEC, 1999/45/EC oder 88/379/EEC klassifiziert als "Xn - Gesundheitsschädlich" und "R22 - Gesundheitsschädlich bei Verschlucken". Im Vergleich dazu war p-Anisaldehyddimethylacetal nach denselben Direktiven kennzeichnungsfrei und ohne R-Satz.

### Beispiel 5 - Flammpunkt

Benzaldehyddimethylacetal hat einen Flammpunkt von 69 °C. p-Anisaldehyddimethylacetal hatte einen Flammpunkt von 114 °C (gemessen nach DIN 53213-1).

### Beispiel 6 - Viskosität

p-Anisaldehyddimethylacetal hatte eine Viskosität von 5,5 mPas bei 20 °C.

### Beispiel 7 -flüssige agrochemische Formulierung

40 g Clodinafop-propargyl und 10 g Cloquintocet-mexyl wurden bei Raumtemperatur in ein Gemisch aus 10 g Soprophor® DSS/7 (Ammoniumsalz eines Sulfats von ethoxyliertem Polyarylphenol, kommerziell erhältlich von Rhodia) in p-Anisaldehyddiemthylacetal eingerührt und mit p-Anisaldehyddiemthylacetal auf 100 ml aufgefüllt. Das so erhaltene Emulsionskonzentrat (EC) zeigt ein gutes Emulsionsverhalten bei Verdünnen (1 Gew.%ig) mit Standardwasser CIPAC-D.

### Beispiel 8-feste agrochemische Formulierung

40 g des Emulsinskonzentrats aus Beispiel 7 wurden auf 30 g Sipernat® 50 S (Silikapulver mit spezifischer Oberfläche von 475 m²/g, mittlere Teilchengröße 7,5 µm) aufgezogen. Das resultierende Absorbat wurde mit 120 g Perlit, 25 g Natriumsalz eines Naphthalensulfonatkondensats, 5 g Aerosol® OT-B (anionisches Tensid), und 1 g Siliconhaltiges Antischaummittel vermischt. Nach Luftstrahlvermahlung wurde dieses Gemisch mit 5 Gew.% Wasser angeteigt und auf einem Laborextruder granuliert (Lochbohrung 0,8 mm). Nach dem Trocknen erhält man ein Granulat mit guter Stabilität und guten Dispergiereigenschaften.

## Patentansprüche

1. Agrochemische Zusammensetzung enthaltend ein Pestizid und ein Lösungsmittel der Formel (A) 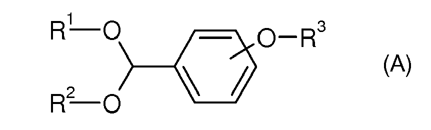 wobei R¹ und R² unabhängig voneinander C₁-C₄-Alkyl sind oder gemeinsam ein C₂-C₆-Alkylen sind, und R³ C₁-C₈-Alkyl ist,
und wobei das Pestizid bei 20 °C zu höchstens 10 g/l in Wasser löslich ist.

2. Zusammensetzung nach Anspruch 1, wobei R³ C₁-C₄-Alkyl ist.

3. Zusammensetzung nach Anspruch 1 oder 2, wobei R¹, R² und R³ Methyl sind.

4. Zusammensetzung nach einem der Ansprüche 1 bis 3, wobei das Lösungsmittel para-Konstitution hat.

5. Zusammensetzung nach einem der Ansprüche 1 bis 4, enthaltend mindestens 10 Gew.% des Lösungsmittels.

6. Zusammensetzung nach einem der Ansprüche 1 bis 5, enthaltend ein anionisches Tensid.

7. Zusammensetzung nach einem der Ansprüche 1 bis 6, wobei das Lösungsmittels eine Löslichkeit in Wasser von höchstens 1,0 Gew.% bei 20 °C hat.

8. Zusammensetzung nach einem der Ansprüche 1 bis 7, wobei das Lösungsmittels das Pestizide in gelöster Form enthält.

9. Zusammensetzung nach einem der Ansprüche 1 bis 8,enthaltend weitere Pestizide, die gelöst, suspendiert und/oder emulgiert vorliegen.

10. Zusammensetzung nach einem der Ansprüche 1 bis 9, wobei das Pestizid bei 20 °C zu mindestens 10 g/l in dem Lösungsmittel löslich ist.

11. Zusammensetzung nach einem der Ansprüche 1 bis 10, enthaltend 20 bis 95 Gew.% des Lösungsmittels.

12. Verfahren zur Herstellung der Zusammensetzung gemäß einem der Ansprüche 1 bis 11, indem man das Pestizid und das Lösungsmittel in Kontakt bringt.

13. Verwendung des Lösungsmittels der Formel (A) gemäß einem der Ansprüche 1 bis 11 in agrochemischen Zusammensetzungen.

14. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung gemäß einem der Ansprüche 1 bis 11 auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

15. Saatgut enthaltend die Zusammensetzung gemäß einem der Ansprüche 1 bis 11.

## Claims

1. An agrochemical composition comprising a pesticide and a solvent of the formula (A) 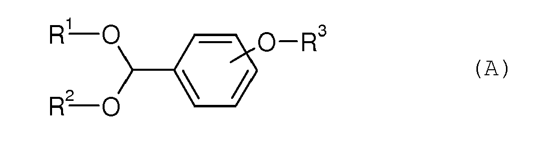 wherein R¹ and R² independently of one another are C₁-C₄-alkyl or together are a C₂-C₆-alkylene, and R³ is C₁-C₈-alkyl,
and wherein the pesticide is soluble in water at 20°C to no more than 10 g/l.

2. The composition according to Claim 1, wherein R³ is C₁-C₄-alkyl.

3. The composition according to Claim 1 or 2, wherein R¹, R² and R³ are methyl.

4. The composition according to any of Claims 1 to 3, wherein the solvent has para constitution.

5. The composition according to any of Claims 1 to 4, comprising at least 10% by weight of the solvent.

6. The composition according to any of Claims 1 to 5, comprising an anionic surfactant.

7. The composition according to any of Claims 1 to 6, wherein the solvent has a solubility in water at 20°C of no more than 1.0% by weight.

8. The composition according to any of Claims 1 to 7, wherein the solvent comprises the pesticide in dissolved form.

9. The composition according to any of Claims 1 to 8, comprising further pesticides which are present in dissolved, suspended and/or emulsified form.

10. The composition according to any of Claims 1 to 9, wherein the pesticide is soluble in the solvent at 20°C to at least 10 g/l.

11. The composition according to any of Claims 1 to 10, comprising from 20 to 95% by weight of the solvent.

12. A process for the preparation of the composition according to any of Claims 1 to 11, which comprises bringing the pesticide and the solvent into contact.

13. The use of the solvent of the formula (A) according to any of Claims 1 to 11 in agrochemical compositions.

14. A method of controlling phytopathogenic fungi and/or undesired vegetation and/or undesired insect or mite attack and/or for regulating the growth of plants, wherein the composition according to any of Claims 1 to 11 is allowed to act on the respective pests, their environment or on the plants to be protected from the respective pest, on the soil and/or on undesired plants and/or on the crop plants and/or on their environment.

15. Seed, comprising the composition according to any of Claims 1 to 11.

## Revendications

1. Composition agrochimique contenant un pesticide et un solvant de formule (A) 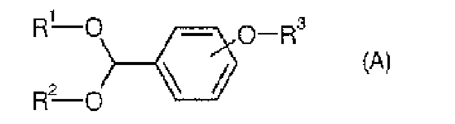 dans laquelle R¹ et R² représentent indépendamment l'un de l'autre un groupe alkyle en C₁-C₄ ou forment ensemble un groupe alkylène en C₂-C₆, et R³ est un groupe alkyle en C₁-C₈,
et le pesticide étant soluble à au maximum 10 g/l dans l'eau à 20 °C.

2. Composition selon la revendication 1, dans laquelle R³ est un groupe alkyle en C₁-C₄.

3. Composition selon la revendication 1 ou 2, dans laquelle R¹, R² et R³ représentent le groupe méthyle.

4. Composition selon l'une quelconque des revendications 1 à 3, dans laquelle le solvant a une constitution para.

5. Composition selon l'une quelconque des revendications 1 à 4, contenant au moins 10 % en poids du solvant.

6. Composition selon l'une quelconque des revendications 1 à 5, contenant un tensioactif anionique.

7. Composition selon l'une quelconque des revendications 1 à 6, dans laquelle le solvant a une solubilité dans l'eau d'au maximum 1,0 % en poids à 20 °C.

8. Composition selon l'une quelconque des revendications 1 à 7, dans laquelle le solvant contient le pesticide sous forme dissoute.

9. Composition selon l'une quelconque des revendications 1 à 8, contenant d'autres pesticides qui sont présents dissous, en suspension et/ou émulsionnés.

10. Composition selon l'une quelconque des revendications 1 à 9, dans laquelle le pesticide est à 20 °C soluble à au moins 10 g/l dans le solvant.

11. Composition selon l'une quelconque des revendications 1 à 10, contenant 20 à 95 % en poids du solvant.

12. Procédé pour la préparation de la composition selon l'une quelconque des revendications 1 à 11, dans lequel on met en contact le pesticide et le solvant.

13. Utilisation du solvant de formule (A) selon l'une quelconque des revendications 1 à 11 dans des compositions agrochimiques.

14. Procédé pour la lutte contre des champignons phytopathogènes et/ou la croissance de plantes indésirables et/ou l'attaque par des insectes ou des acariens indésirables et/ou pour la régulation de la croissance de plantes, dans lequel on fait agir la composition selon l'une quelconque des revendications 1 à 11 sur les nuisibles respectifs, leur habitat ou sur les plantes à protéger contre le nuisible respectif, sur le sol et/ou sur des plantes indésirables et/ou sur les plantes utiles et/ou leur habitat.

15. Semence contenant la composition selon l'une quelconque des revendications 1 à 11.
